# EUROPEAN PATENT APPLICATION

(11) **EP 0 564 051 A1**
(43) Date of publication of application: **06.10.1993**
(21) Application number: 93200952.5
(22) Date of filing: 02.04.1993
(51) Int. Cl.: G06K 19/02, G06K 19/067, H04B 7/14, G06K 19/077

(54) **Identification card having a reusable inner part**

(30) Priority: 02.04.1992 NL 9200618
(71) Applicant: N.V. Nederlandsche Apparatenfabriek NEDAP, NL-7141 DE Groenlo (NL)
(72) Inventor: Hogen Esch, Johannes Harm Lukas, NL-7122 ZN Aalten (NL)
(74) Representative: Smulders, Theodorus A.H.J., Ir.

(57) **Abstract**

Contactlessly readable identification and/or admission card, wherein the card consists of a reusable inner part comprising an electronic circuit for the purpose of contactless communication with a transmitter/receiver, which inner part is accommodated in a casing comprising a plastic frame enclosing the inner part, this frame being provided with sheet-form plastic covering means on opposite sides of the inner part, these covering means being suitable to be provided with printed information regarding the holder and/or the scope of validity.

## Description

The present invention relates to a contactlessly readable identification and/or admission card, for instance for use in public transport in buses, trams, trains and the underground or as an admission card in skiing areas (lift pass) or as an admission card for soccer matches, etc. Contactless identification or admission cards provided with an integrated electronic circuit can, if so desired, be made in a design which is (contactlessly) reprogrammable, for instance as described in applicant's European patent 0 242 906. Because these cards function in contactless manner and therefore need not come into contact with the reading apparatus in the form of a transmitter/receiver generating an electromagnetic interrogation field and because they do not contain a battery but draw their supply energy from an interrogation field generated by a transmitter, they can have a long lifetime, for instance of ten years or more. This makes it possible to write down the costs of such a card over several years, which makes such a card system highly advantageous in comparison with other automatically readable card systems, such as for instance plastic magnetic cards or even paper magnetic cards. Because such a card does not always remain with the same holder for this prolonged period, it must be possible for the card to be issued several times within the system. Such cards should accordingly be reusable. A problem associated with reuse of cards is that these cards are generally personified, i.e., the cards are provided with printed information regarding the holder and the scope of validity. Also, the cards are often provided with a photograph of the holder. Another problem associated with reuse of cards in the above-mentioned systems is the soiling of the card which may occur over a long period of use and is not acceptable to a subsequent holder. A further requirement for a reusable card system is that it should be possible for the cards to be printed and issued quickly, enabling rapid circulation at the sales outlets. This means that the cards must have a well-defined form to make it possible to process them automatically, for instance from magazines or from rolls or the like.

The object of the present invention is to provide a solution to the above-mentioned problems.

To that end, according to the invention, a card of the above-described type is characterised in that the card consists of a reusable inner part comprising an electronic circuit for the purpose of contactless communication with a transmitter/receiver, this inner part being accommodated in a casing comprising a plastic frame enclosing the inner part, this frame being provided with sheet-form plastic covering means on opposite sides of the inner part, these covering means being suitable to be provided with printed information regarding the holder and/or the scope of validity.

An issuing system for cards of the above-described type is characterised, according to the invention, by a magazine for the cards, a feeding device for thermotransfer sublimation foil and a thermotransfer printing head, and feeding means capable of feeding a card from the magazine to the thermotransfer printing head together with the thermotransfer sublimation foil.

Hereinafter, the invention will be further explained with reference to the drawings.
Fig. 1 schematically shows a top plan view of an example of a card according to the invention;
Fig. 2 shows an exploded view of the card of Fig. 1; and
Fig. 3 schematically shows an example of an issuing system according to the invention.

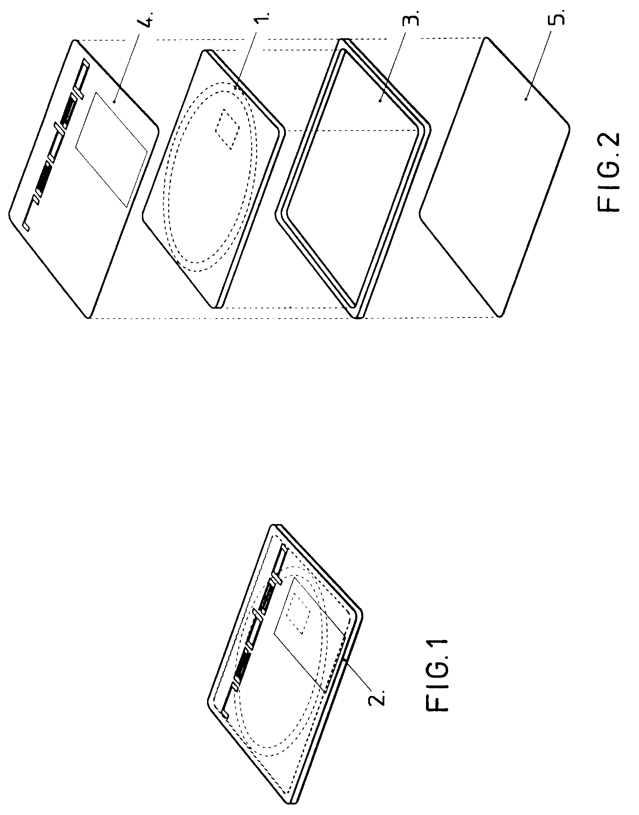

Figs. 1 and 2 show an example of a card according to the invention, which is made up of a reusable part 1 and an exchangeable casing 2. The reusable part consists of a plastic card comprising an electronic circuit and an antenna in the form of a coil, which enables contactless information exchange via an interrogation field with a reader in the form of a transmitter/receiver. The card can be programmed before or after the inner part has been arranged in the casing, as desired, for instance immediately before, during or after the casing has been printed. The exchangeable casing 2 comprises a plastic frame 3, which fits exactly around the reusable part 1, and two thin plastic foils 4 and 5, which are fixedly laminated to the frame 3 by means of a hot punch which causes the plastics to fuse, or effects a joint by means of a layer of glue. The reusable part 1 is not fixedly laminated or glued to the plastic foils 4 and 5. Because the part 1 is not bonded to the foils 4 and 5, the reusable part 1 and the exchangeable casing 2 can be separated from each other again by means of a simple cutting punch. In this way, a new casing can be provided around the card, which casing can be printed directly for the personification of the card.

For convenience in use, the casing of the card preferably has dimensions corresponding to those of a bank pass according to ISO 7812. Only the thickness of the card is slightly greater, which, however, is not disturbing in use at all.

To provide a printing on the casing (foil 4 and/or foil 5) and in particular also to provide the card with (recorded) image information, such as for instance a (passport) photograph, the issuing system, the principle of which is depicted in Fig. 2, utilises a thermotransfer sublimation printer. Such a printer, which is known per se, makes it possible to give grey tints varying from very light grey to black to the individual dots or pixels which make up the printed information. This can be accomplished by providing the thermoelements in the printing head of the printer with varying energy levels, for instance by amplitude modulation or by pulse width modulation of the print signal which is applied to these thermoelements. A thermotransfer sublimation printer utilises thermotransfer foil. The thermotransfer foil consists of an extremely thin plastic foil provided with special ink which can volatilize and subsequently sublime on the surface to be printed and is disposed between the printing head, provided with thermoelements, and the surface to be printed. In this case, the card is provided with the exchangeable casing. Depending on the amount of energy supplied, a larger or lesser amount of ink will volatilize and subsequently sublime on the card, yielding for each thermoelement a controllable grey tint in the printing. The ink and the plastic of the casing or a top layer provided thereon can advantageously be of such composition that a chemical reaction between these materials occurs which makes it very difficult to remove the colouring of the print, which thereby acquires a long lifetime.

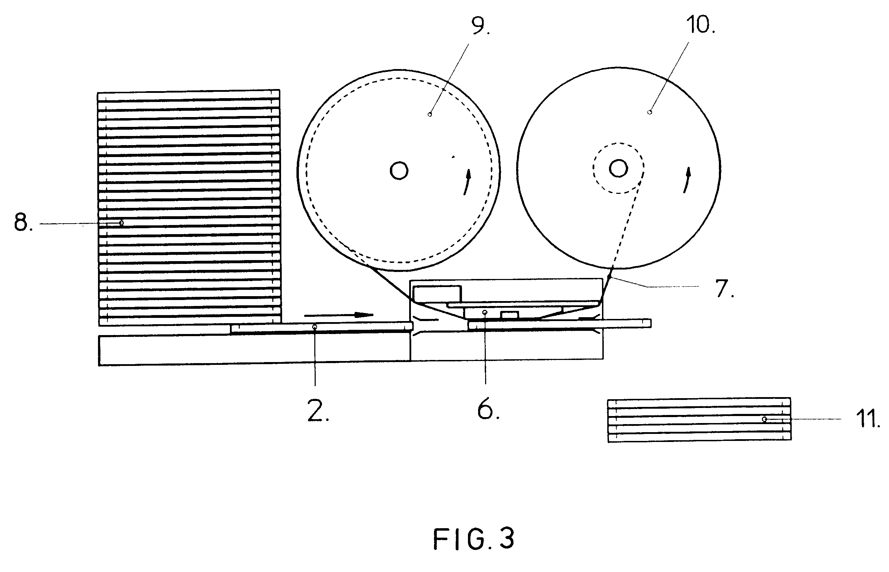

Fig. 3 shows the principle of the automatic card issuing device. The cards 2 provided with the above-mentioned casing, which may optionally be provided with preprinted information regarding use or with preprinted advertisements, are supplied from a magazine 8 and passed under the printing head 6 with transfer foil 7. During transport, the transfer foil is unrolled off roll 9 and, after being printing, rolled onto roll 10 again. The information to be printed can be provided by a computerised cash register system, while the photo can be recorded, optionally simultaneously by means of a video camera, and, with or without prior digital processing, can be printed directly. The cards which are finished can, if so desired, be collected after printing in a receptacle as indicated schematically at 11.

The cards may optionally be supplied from a roll instead of a magazine. One way of making such a roll is to arrange that during the lamination of the casing around the reusable part of the card, at least one of the foils to be laminated and normally supplied from a supply roll, is not cut but left on the roll. The foil provided with cards can, if so desired, be rolled up again until the issue of a card is desired. After the desired information has been printed on the card, a punching operation can then take place, whereby the cards are punched from the roll. A disadvantage involved here is that waste material is produced at the point of issue, which must be removed and may be cumbersome in the typically limited space that is available for cash register systems. Naturally, it is also possible to construct the exchangeable casing 2 of the card as a plastic part, manufactured for instance by injection moulding, in the form of a box open on one side, so that subsequently only one side thereof needs to be covered with a plastic foil in the manner described. It is also possible to utilise two parts in the form of boxes, manufactured by injection moulding or the like, which are welded or glued together. The use of a cling film as an exchangeable casing for a card is also one of the possibilities.

Further, the foils may, if so desired, be coated or have a layered structure. A box-shaped part as described above can, if so desired, be provided with a special top layer on the flat side thereof.

By providing the printer with several, for instance four, printing heads and using thermotransfer sublimation printing foil of different colours, likewise four, for instance, it is possible to print four colours in succession and in synchronisation. Suitable colours are, for instance, the basic colours red, yellow, green and blue. This makes it possible to print in colour and to image photos or graphic pictures in colour.

These and similar modifications are understood to fall within the scope of the invention.

## Claims

1. A contactlessly readable identification and/or admission card, characterised in that the card consists of a reusable inner part comprising an electronic circuit for the purpose of contactless communication with a transmitter/receiver, said inner part being accommodated in a casing comprising a plastic frame enclosing said inner part, said frame being provided with sheet-form plastic covering means on opposite sides of the inner part, said covering means being suitable to be provided with printed information regarding the holder and/or the scope of validity.

2. A contactlessly readable identification and/or admission card according to claim 1, characterised in that the electronic circuit comprises a reprogrammable memory part, which, simultaneously with or directly before or after printing of the card, is likewise provided with information regarding the user and/or the scope of use of the card, which information can be read in contactless manner via a transmitter/receiver.

3. A contactlessly readable identification and/or admission card with issuing system according to claim 1 or 2, characterised in that at least one of the plastic covering means is suitable to be printed by a thermotransfer sublimation printer.

4. A contactlessly readable identification and/or admission card according to any one of the preceding claims, characterised in that the casing consists of a plastic frame having a plastic foil laminated thereon on opposite sides, which plastic foils are not bonded to the inner part.

5. A contactlessly readable identification and/or admission card according to any one of claims 1-3, characterised in that the casing comprises a flat, box-shaped part, open on one side, which accommodates the inner part and which is covered at the open side by a covering means bonded to the edges of the box-shaped part.

6. A contactlessly readable identification and/or admission card according to claim 5, characterised in that the covering means is a foil arranged by lamination or glueing.

7. A contactlessly readable identification and/or admission card according to any one of the preceding claims 1-3, characterised in that the casing consists of a flat, box-shaped bottom part, as well as a flat, box-shaped cover part made of plastic, which parts are bonded to each other around the reusable inner part through a welding process or through glueing.

8. A contactlessly readable identification and/or admission card according to any one of claims 1-3, characterised in that the exchangeable casing consists of a cling film which has been detachably shrunk around the reusable part of the card by thermally heating this film after it has been arranged around the innert part.

9. A contactlessly readable identification and/or admission card according to any one of claims 1-8, characterised in that the plastic material to be printed comprises at least a top layer of a composition such that a chemical reaction of the ink to be used and this plastic material occurs in such a manner that the printed printing is substantially non-removable.

10. An issuing system for a contactlessly readable identification and/or admission card according to any one of the preceding claims, characterised by a magazine for the cards, a feeding device for thermotransfer sublimation foil and a thermotransfer printing head, as well as feeding means which are capable of feeding a card from the magazine to the thermotransfer printing head together with the thermotransfer sublimation foil.

11. An issuing system for a contactlessly readable identification and/or admission card according to claim 10, characterised in that the magazine comprises a roll of cards interconnected by foil, the cards being supplied from the roll to the printing head, whilst a punching apparatus is arranged which can punch the cards from the roll after printing and optional programming.

12. An issuing system according to claim 10 or 11, characterised by an apparatus capable of converting image information into control signals for the printing head for reproducing a recorded image on a card.

13. An issuing system according to any one of claims 10-12, characterised in that the issuing system comprises a plurality of printing heads, each provided with a thermotransfer sublimation foil to print the cards in colour by printing the individual colours in succession and in synchronisation.

14. An issuing system according to any one of claims 10-13, characterised by a settable contactless programming device for the cards.
